# EUROPÄISCHE PATENTSCHRIFT

(11) **EP 0 296 327 B1**
(45) Date of publication and mention of the grant of the patent: **18.08.1993**
(21) Application number: 88106178.2
(22) Date of filing: 19.04.1988
(51) Int. Cl.: H02M 3/156

(54) **DC power supply circuit**
Gleichspannungsversorgungsschaltung
Dispositif d'alimentation sous tension continue

(30) Priority: 26.06.1987 DE 19873721075
(43) Date of publication of application: 28.12.1988
(73) Proprietor: TRILUX-LENZE GmbH & Co. KG, D-59759 Arnsberg (DE)
(72) Inventor: Mertens, Ferdinand, Dipl.-Ing., D-5760 Arnsberg (DE); Hasemann, Fred, Dr.-Ing., D-5760 Arnsberg 1 (DE); Wittig, Norberg, Dipl.-Ing., D-5760 Arnsberg 1 (DE)
(74) Representative: Selting, Günther, Dipl.-Ing., et al

(56) References cited:
- EP-0 167 194
- EP-0 039 952
- DE-3 227 103

## Description

Die Erfindung betrifft eine Gleichspannungsversorgungsschaltung nach dem Oberbegriff des Patentanspruchs 1.

Bekannt sind Gleichspannungsversorgungsschaltungen mit Schaltnetzteilen. Schaltnetzteile enthalten eine an die Versorgungsspannung angeschlossene Reihenschaltung aus einem Schalter und einer Induktivität. Der Schalter wird abwechselnd in den leitenden und nichtleitenden Zustand gesteuert, um in der Leitendphase die Induktivität aufzuladen. In der Nichtleitendphase des Schalters entlädt sich die Induktivität zum Verbraucher. Die Steuerung des Schalters erfolgt über eine Regelschaltung in Abhängigkeit von einer Stromoder Spannungsgröße der Reihenschaltung. Schaltnetzteile haben den Vorteil, daß zur Erzeugung einer Gleichspannung relativ kleine Induktivitäten ausreichen und daß auch Gleichspannungen erzeugt werden können, die höher sind als die Versorgungsspannung.

Man unterscheidet z.B. zwischen zwei Arten von Schaltnetzteilen, nämlich Durchfluß- und Sperrwandler. Bei beiden Arten besteht eine Schwierigkeit darin, eine Hilfsspannung zur Versorgung der Regelschaltung zu erzeugen. Prinzipiell kann die Hilfsspannung aus der erzeugten Gleichspannung gewonnen werden, jedoch ist die Hilfsspannung in der Regel viel kleiner als die erzeugte Gleichspannung. Würde man die Hilfsspannung mit einem Spannungsteiler aus der Gleichspannung gewinnen, dann würden durch den Spannungsteiler hohe Leistungsverluste entstehen, insbesondere dann, wenn die Gleichspannungsversorgungsschaltung imstande sein soll, Spannungen unterschiedlicher Größe zu erzeugen. Anstelle eines Spannungsteilers könnte man eine Konstantstromquelle vorsehen, die an einem Widerstand einen definierten Spannungsabfall erzeugt, der als Hilfsspannung verwendbar ist. Bei einer solchen Schaltung wären die Verluste zwar unabhängig von der Höhe der erzeugten Gleichspannung, jedoch wäre ein hoher Aufwand erforderlich und es würde immer noch eine nicht unerhebliche Verlustleistung entstehen.

EP-A-0 167 194 beschreibt eine Schaltungsanordnung zur Versorgung der Regel- und Steuereinrichtung eines geregelten Gleichspannungswandlers. Dabei wird ein Ladekondensator, aus dem die Regel- und Steuereinrichtung des Gleichspannungswandlers gespeist wird, während der Anlaufphase durch die Eingangsspannung des Gleichspannungswandlers und während des Betriebszustandes durch eine Hilfsspannung auf der Sekundärseite des Gleichspannungswandlers geladen. Die Umschaltung erfolgt durch einen Schwellwertschalter, der eine ein- und ausschaltbare Konstantstromquelle ausschaltet, sobald die Spannung am Ladekondensator um einen vorgegebenen Betrag größer ist als eine Referenzspannung.

Der Erfindung liegt die Aufgabe zugrunde, eine Gleichspannungsversorgungsschaltung mit Schaltnetzteil nach der im Oberbegriff des Patentanspruchs 1 angegebenen Art zu schaffen, bei der die Hilfsspannung zur Versorgung der Regelschaltung auf einfache Weise mit geringem Aufwand und nahezu verlustlos gewonnen wird.

Die Lösung dieser Aufgabe erfolgt mit den im kennzeichnenden Teil des Patentanspruchs 1 angegebenen Merkmalen.

Bei der erfindungsgemäßen Gleichspannungsversorgungsschaltung enthält die Reihenschaltung aus dem Schalter und der Induktivität zusätzlich noch einen Hilfsschalter, der ebenfalls von der Regelschaltung gesteuert wird. Dieser Hilfsschalter ist im wesentlichen immer dann leitend, wenn der Schalter leitend ist und im wesentlichen immer dann gesperrt, wenn der Schalter gesperrt ist. Wichtig ist, daß der Hilfsschalter grundsätzlich in gleicher Weise gesteuert ist wie der Schalter, sodaß die Funktion des Reihenkreises zum Aufladen und Entladen der Induktivität beibehalten wird. Diese im wesentlichen synchrone Steuerung der beiden Schalter erfolgt mit der Ausnahme, daß der Hilfsschalter in den Zeiten, in denen der Schalter leitend ist, jeweils kurzzeitig in den nichtleitenden Zustand gesteuert bzw. im nichtleitenden Zustand gehalten wird, um den Kondensator über die Diode aufzuladen. Während eines kurzen Abschnitts der Leitendphase des Schalters wird also der Hilfsschalter in den Sperrzustand geschaltet, wodurch der Kondensator aufgeladen und die Versorgungsspannung für die Regelschaltung auf ihren Sollwert ergänzt wird. Während der nachfolgenden Steuervorgänge entlädt sich der Kondensator in dem Maße, in dem die Regelspannung Strom verbraucht. Die Kondensatorspannung sinkt also langsam ab, um bei der nächstfolgenden Auffrischung wieder ergänzt zu werden.

Die Zeiten, in denen der Schalter leitend bzw. nichtleitend ist, liegen in der Größenordnung von Mikrosekunden. Die Zeiten, in denen der Schalter leitend und gleichzeitig der Hilfsschalter nichtleitend sind, liegen in der Größenordnung von Nanosekunden. Die Einschaltzeiten und Ausschaltzeiten des Schalters sind daher wesentlich größer als die Aufladezeiten des Kondensators. Beide Zeiten unterscheiden sich annähernd um einen Faktor zwischen 10 und 100.

Die Regelschaltung, die die Steuervorgänge des Sperrwandlers ausführt, ist beim Einschalten der Gleichspannungsversorgungsschaltung noch nicht funktionsfähig, weil sich zu diesem Zeitpunkt die Hilfsspannung noch nicht aufgebaut hat. Eine Möglichkeit der Erzeugung der Hilfsspannung in diesem Zustand ist im Anspruch 3 angegeben. Der Schalter ist hierbei so geschaltet, daß über ihn ein Hilfsstrom fließt, wenn die Versorgungsspannung ansteht, die Regelschaltung aber noch nicht versorgt wird und den Schalter noch nicht steuert.

Der Schalter und der Hilfsschalter sind vorzugsweise elektronische Schalter, jedoch können prinzipiell auch mechanische Schalter benutzt werden. Bei Verwendung elektronischer Schalter, z.B. ais Transistoren, kann die Schaltung zur Erzeugung des Hilfsstroms aus einem Widerstand bestehen, der Kollektor und Basis des Transistors miteinander verbindet. Sobald die Eingangsspannung angelegt ist, wird der Transistor in den aktiven Bereich gesteuert und der Hilfsstrom kann fließen. Auf diese Weise baut sich am Kondensator die Hilfsspannung auf, wodurch die Regelschaltung in den betriebsfähigen Zustand versetzt wird.

Die Steuerung des Hilfsschalters ist auf sehr einfache Weise möglich, indem der Hilfssächalter durch das Steuergerät grundsätzlich in gleicher Weise gesteuert wird wie der Schalter, jedoch mit einem geringen zeitlichen Versatz. Wenn die Schaltzustände des Hilfsschalters denjenigen des Schalters um eine kurze Zeit voreilen, ergibt sich im Anschluß an jede Leitendphase des Hilfsschalters eine kurze Zeit, in der der Schalter noch leitend ist. In dieser Zeit wird der Kondensator aufgeladen.

Ein wesentlicher Vorteil der Erfindung besteht darin, daß der als Hilfsschalter benutzte Transistor nur eine sehr geringe Leistung zu schalten hat und auch nur niedrigen Spannungen ausgesetzt ist. Es kann also ein üblicher Transistor mit geringer Schaltleistung verwendet werden. Der als Schalter verwendete Transistor, der die Schaltleistung aufbringen muß, ist dagegen für höhere Leistungen zu dimensionieren.

Die Erfindung kann sowohl bei Sperr- als auch bei Durchflußwandlern angewendet werden.

Im folgenden wird ein Ausführungsbeispiel der Erfindung unter Bezugnahme auf die Zeichnungen anhand eines Schaltnetzteiles näher erläutert.

Es zeigen:
- Fig. 1: ein schematisches Schaltbild einer Gleichspannungsversorgungsschaltung und
- Fig. 2: eine schematische Darstellung verschiedener Verläufe bzw. Schaltzustände bei der Gleichspannungsversorgungsschaltung nach Fig. 1.

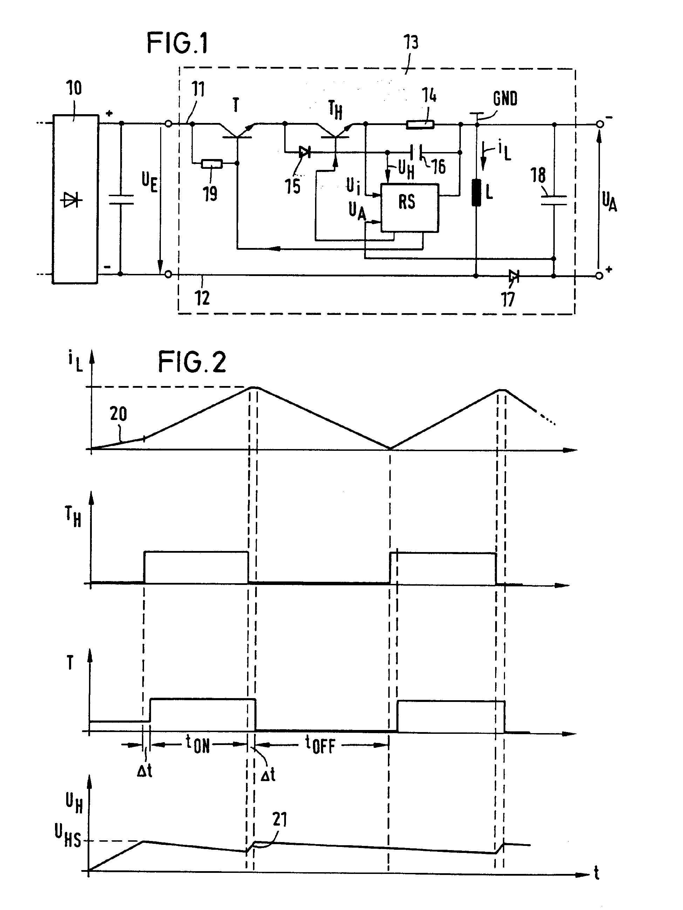

Gemäß Fig. 1 ist eine Gleichrichterschaltung 10 vorgesehen, die als Doppelweggleichrichter ausgebildet ist und deren Eingang über ein (nicht dargestelltes) Hochfrequenzfilter mit der Netzspannung von z.B. 220 Volt und 50 Hz verbunden ist. Am Ausgang der Gleichrichterschaltung 10 entsteht die Versorgungsspannung U_{E} in Form einer gleichgerichteten Wechselspannung. Die Versorgungsspannung U_{E} liegt zwischen den beiden Eingangsleitungen 11 und 12 des Schaltnetzteiles 13 in Form eines Sperrwandlers. Die eine Eingangsleitung 11 enthält eine Reihenschaltung aus einem elektronischen Schalter T, z.B. einem Transistor, einem elektronischen Hilfsschalter T_{H}, z.B. einem Transistor, und einem niederohmigen Strommeßwiderstand 14. Das eine Bein des Strommeßwiderstandes 14 ist mit Massepotential GND verbunden. Zwischen Massepotential GND und der Eingangsleitung 12 liegt die Induktivität (Spule) L, die somit mit dem Schalter T, dem Hilfsschalter T_{H}, und dem Strommeßwiderstand 14 eine an der Versorgungsspannung U_{E} liegende Reihenschaltung bildet.

An die mit dem Minuspol der Versorgungsspannung verbundene Leitung 12 ist über die Diode 17 der Pluspol des Kondensators 18 angeschlossen, dessen Minuspol mit Massepotential GND verbunden ist. Am Kondensator 18 entsteht die Ausgangsspannung U_{A} nämlich die zu erzeugende Gleichspannung.

Der in Fig. 1 dargestellte Schaltregler erzeugt eine Polumkehr zwischen den Spannungen U_{E} und U_{A}, d.h. die Ausgangsspannung U_{A} hat die umgekehrte Polarität der Eingangsspannung U_{E}.

Bei leitenden Schaltern T und T_{H} wird die Induktivität L über den Meßwiderstand 14 und den Gleichrichter 10 aufgeladen, wobei ein annähernd linearer Anstieg des Spulenstroms i_{L} erfolgt. Werden beide Schalter T, T_{H} nichtleitend, dann versucht die Induktivität L den Spulenstrom aufrechtzuerhalten. Da dies nur durch einen Stromfluß durch die Reihenschaltung aus Kondensator 18 und Diode 17 möglich ist, fließt der Spulenstrom auf den Kondensator 18, der hierdurch aufgeladen wird.

Der Sperrwandler 13 enthält eine Regelschaltung RS, die mit Massepotential als Bezugspotential verbunden ist. Einem Eingang der Regelschaltung wird die stromabhängige Spannung Uᵢ am Meßwiderstand 14 und einem anderen Eingang die Ausgangsspannung U_{A} zugeführt. Die an den Eingängen der Regelschaltung RS anstehenden Potentiale repräsentieren Spannungen in bezug auf Massepotential GND. Die Regelschaltung RS steuert den Schalter T und den Hilfsschalter T_{H} in noch zu erläuternder Weise.

Parallel zu der Reihenschaltung aus dem Hilfsschalter T_{H} und dem niederohmigen Meßwiderstand 14 ist eine Reihenschaltung aus einer Diode 15 und einem Kondensator 16 geschaltet. Am Verbindungspunkt von Diode 15 und Kondensator 16 entsteht die Hilfsspannung U_{H}, die der Regelschaltung RS als Versorgungs-spannung zugeführt wird. Der Kondensator 16 liegt mit einem Bein an Massepotential.

Der Schalter T ist ein npn-Transistor, dessen Emitter mit dem Kollektor des Transistors T_{H} verbunden ist. Der Kollektor des Transistors T ist an die Eingangsleitung 11 angeschlossen und von dieser führt ein Widerstand 19 zur Basis des Transistors T. Die Basen beider Transistoren T und T_{H} werden von der Regelschaltung RS gesteuert.

In Fig. 2 sind die Schaltzustände der Schaltung nach Fig. 1 schematisch dargestellt. i_{L} gibt den zeitlichen Verlauf des durch die Induktivität L fließenden Stromes an. Ferner sind die Schaltzustände der Transistoren T_{H} und T dargestellt, wobei ein Impuls jeweils andeutet, daß der betreffende Transistor leitend ist, während eine Impulslücke angibt, daß der Transistor gesperrt ist. U_{H} gibt den zeitlichen Verlauf der am Kondensator 16 erzeugten Hilfsspannung an.

Wenn die Schaltung in Betrieb genommen wird, sind beide Transistoren gesperrt und die Regelschaltung RS wird noch nicht mit Spannung versorgt. Die Versorgungsspannung U_{E} gelangt über den Widerstand 19 an die Basis des Transistors T. Hierüber fließt ein Strom durch die Basis-Emitter-Diode des Transistors T. Hierdurch wird der Transistor T in den aktiven Bereich gesteuert und ein Hilfsstrom kann über die Diode 15 und den Kondensator 16 fließen. Gleichzeitig fließt dieser Strom durch die Induktivität L nach Leitung 12. Dieser Ladestrom des Kondensators 16 ist in Fig. 2 mit 20 bezeichnet. Sobald die Spannung U_{H} am Kondensator 16 den Sollwert U_{HS} von z.B. 12V erreicht hat, beginnt die Regelschaltung RS zu arbeiten. Die Regelschaltung steuert beide Transistoren T und T_{H} generell synchron, wobei jedoch die Steuerung von T_{H} derjenigen von T um eine geringe Zeitdifferenz Δ T von einigen Nanosekunden voreilt. Zuerst wird also T_{H} leitend und kurze Zeit danach wird auch T leitend. Die Leitendzeit, in der beide Transistoren im leitenden Zustand sind, ist als t_{ON} bezeichnet. Diese Zeit ist konstant. Die Sperrzeit t_{OFF}, in der beide Transistoren im Sperrzustand sind, hängt vom Verlauf des Spulenstroms i_{L} ab. Diese Zeit wird beendet, wenn der Spulenstrom Null wird, was durch die Spannung Uᵢ festgestellt wird.

In der Leitendzeit t_{ON} steigt der Spulenstrom i_{L} annähernd linear an. Bei Beendigung von t_{ON} wird zunächst T_{H} in den Sperrzustand geschaltet. Während der Zeit Δt lädt sich der Kondensator 16, der zuvor durch den Stromverbrauch der Regelschaltung RS teilweise entladen worden war, wieder auf, was in Fig. 2 mit 21 bezeichnet ist. Die Regelschaltung begrenzt die Hilfsspannung U_{H} auf den Sollwert U_{HS}. Nach Beendigung von Δt wird auch der Transistor T gesperrt und es schließt sich die Auszeit t_{OFF} an, in der die Induktivität L sich auf den Kondensator 18 entlädt und der Spulenstrom i_{L} linear abfällt. Wenn der Spulenstrom zu Null geworden ist, schaltet die Regelschaltung RS zunächst den Transistor T_{H} ein. Zu dieser Zeit kann, da T noch gesperrt ist, der Kondensator 16 nicht aufgeladen werden. Die Hilfsspannung U_{H} sinkt also über eine Auszeit t_{OFF} und eine Einzeit t_{ON} hinweg ab, um vor Beginn der nächstfolgenden Einzeit wieder auf den Sollwert U_{HS} anzusteigen.

Die Dauer der Einzeit t_{ON} wird von der Regelschaltung RS in Abhängigkeit von der gewünschten Ausgangsspannung U_{A} vorgegeben. Wenn die Ausgangsspannung erhöht werden soll, wird t_{ON} verlängert. Um die Ausgangsspannung regeln zu können, wird der Regelschaltung der Istwert dieser Ausgangsspannung zugeführt.

Abweichend von dem beschriebenen Ausführungsbeispiel kann die Steuerung auch so erfolgen, daß eine Aufladung des Kondensators 16 nicht nur vor jeder Auszeit t_{OFF}, sondern zusätzlich auch vor jeder Einzeit t_{ON} erfolgt. Hierzu müßte die Steuerung von T_{H} so erfolgen, daß dieser Transistor nach Leitendschalten des Transistors T noch kurze Zeit nichtleitend gehalten wird.

Ferner besteht die Möglichkeit, die Schaltzustände von T denjenigen von T_{H} voreilen zu lassen.

## Claims

1. A DC supply circuit including a switch-mode power supply unit (13) for generating a DC voltage (U_{A}) of a constant level from a supply voltage (U_{E}), comprising
- an inductivity (L) which, together with a switch (T), a capacitor (18) and a diode (17) forms a series-circuit connected to the supply voltage,
- a measuring sensor (14) for detecting a current value or voltage value of the series-circuit,
- a regulator circuit (RS) which, responsive to the signal of the measuring sensor (14), alternatingly controls the switch (T) to become conductive or nonconductive, **characterized in**
- **that** the series-circuit contains an auxiliary switch (T_{H}) to which a series-circuit of a diode (15) and a further capacitor (16) are connected in parallel,
- **that**, from said further capacitor (16), an auxiliary voltage (U_{H}) is drawn as a supply voltage for the regulator circuit (RS),
- and **that** the regulator circuit (RS) controls the auxiliary switch (T_{H}) substantially in the same manner as the switch (T), except that it shortly maintains the auxiliary switch (T_{H}) nonconductive in those times, when the switch (T) is conductive, in order to charge the capacitor (16) up to the auxiliary voltage.

2. The DC supply circuit as defined in claim 1, **characterized in that** the auxiliary voltage (U_{H}) is limited by the regulator circuit (RS) to a predetermined set value (U_{HS}).

3. The DC supply circuit as defined in claim 1 or 2, **characterized** that the switch (T) is positioned between a terminal of the supply voltage (U_{E}) and the auxiliary switch (T_{H}) and is so connected that, upon applying the supply voltage (U_{E}), an auxiliary current flows through the diode (15) to said further capacitor (16), when the regulator circuit (RS) is not yet operative.

4. The DC supply circuit as defined in one of claims 1 to 3, **characterized in that** the switch (T) is driven into the nonconductive state with a delay (Δt) with respect to the auxiliary switch (T_{H}).

5. The DC supply circuit as defined in one of claims 1 to 4, **characterized in that** the auxiliary switch (T_{H}) is driven into the conductive state with a delay (Δt) with respect to switch (T).

## Patentansprüche

1. Gleichspannungsversorgungsschaltung mit einem Schaltnetzteil (13) zur Erzeugung einer Gleichspannung (U_{A}) konstanter Höhe aus einer Versorgungsspannung (U_{E}), mit
- einer Induktivität (L), die einen mit einem Schalter (T), einem Kondensator (18) und einer Diode (17) eine an der Versorgungsspannung liegende Reihenschaltung bildet,
- einem Meßfühler (14) zur Ermittlung einer Strom- oder Spannungsgröße der Reihenschaltung,
- und einer Regelschaltung (RS), die den Schalter (T) in Abhängigkeit von dem Signal des Meßfühlers (14) abwechselnd in den leitenden und nichtleitenden Zustand steuert.
**dadurch gekennzeichnet**
- **daß** die Reihenschaltung einen Hilfsschalter (T_{H}) enthält, dem eine Diode (15) und ein weiterer Kondensator (16) in Reihe parallelgeschaltet sind,
- **daß** von dem weiteren Kondensator (16) eine Hilfsspannung (U_{H}) als Versorgungsspannung für die Regelschaltung (RS) abgenommen wird
- und **daß** die Regelschaltung (RS) den Hilfsschalter (T_{H}) im wesentlichen in gleicher Weise steuert wie den Schalter (T), den Hilfsschalter (T_{H}) jedoch während derjenigen Zeiten, in denen der Schalter (T) im leitenden Zustand ist, kurzzeitig im nichtleitenden Zustand hält, um den Kondensator (16) auf die Hilfsspannung aufzuladen.

2. Gleichspannungsversorgungsschaltung nach Anspruch 1, **dadurch gekennzeichnet, daß** die Regelschaltung (RS) die Hilfsspannung (U_{H}) auf einen vorgegebenen Sollwert (U_{HS}) begrenzt.

3. Gleichspannungsversorgungsschaltung nach Anspruch 1 oder 2, **dadurch gekennzeichnet, daß** der Schalter (T) zwischen einem Pol der Versorgungsspannung (U_{E}) und dem Hilfsschalter (T_{H}) liegt und derart geschaltet ist, daß bei Anlegen der Versorgungsspannung (U_{E}) ein Hilfsstrom durch die Diode (15) zu dem weiteren Kondensator (16) fließt, wenn die Regelschaltung (RS) noch nicht funktionsfähig ist.

4. Gleichspannungsversorgungsschaltung nach einem der Ansprüche 1 bis 3, **dadurch gekennzeichnet, daß** der Schalter (T) mit einer Verzögerung (Δt) in bezug auf den Hilfsschalter (T_{H}) in den nichtleitenden Zustand gesteuert wird.

5. Gleichspannungsversorgungsschaltung nach einem der Ansprüche 1 bis 4, **dadurch gekennzeichnet, daß** der Hilfsschalter (T_{H}) mit einer Verzögerungszeit (Δt) in bezug auf den Schalter (T) in den leitenden Zustand gesteuert wird.

## Revendications

1. Dispositif d'alimentation sous tension continue à circuit de commutation (13), destiné à générer une tension continue (U_{A}) d'un niveau constant à partir d'une tension d'alimentation (U_{E}), comportant :
- une inductance (L) qui forme, avec un interrupteur (T), un condensateur (18) et une diode (17), un couplage en série raccordé à la tension d'alimentation,
- un capteur (14) destiné à déterminer une grandeur de courant ou de tension du couplage en série,
- et un circuit de régulation (RS) qui commande l'interrupteur (T), en fonction du signal du capteur (14), en alternance à l'état conducteur et non-conducteur, **caractérisé en ce**
- **que** le couplage en série comporte un interrupteur auxiliaire (T_{H}) avec lequel sont connectés en parallèle une diode (15) et un autre condensateur (16),
- **que** de l'autre condensateur (16) est prélevée une tension auxillaire (U_{H}) comme tension d'alimentation pour le circuit de régulation (RS), et
- **que** le circuit de régulation (RS) commande l'interrupteur auxiliaire (T_{H}) sensiblement de la même manière que l'interrupteur (T), mais maintient l'interrupteur auxilaire (T_{H}), pendant les périodes pendant lesquelles l'interrupteur (T) se trouve à l'état conducteur, pendant un court laps de temps à l'état non-conducteur, afin de charger le condensateur (16) à la tension auxiliaire.

2. Dispositif d'alimentation sous tension continue suivant la revendication 1, **caractérisé en ce que** le circuit de régulation (RS) limite la tension auxiliaire (U_{H}) à une valeur nominale (U_{HS}) prédéterminée.

3. Dispositif d'alimentation sous tension continue suivant la revendication 1 ou 2, **caractérisé**' en ce que l'interrupteur (T) est placé entre un pôle de la tension d'alimentation (U_{E}) et l'interrupteur auxiliaire (T_{H}) et est commuté de telle manière que, lors de l'établissement de la tension d'alimentation (U_{E}), un courant auxiliaire circule, par la diode (15), vers l'autre condensateur (16) lorsque le circuit de régulation (RS) n'est pas encore capable de fonctionner.

4. Dispositif d'alimentation sous tension continue suivant l'une des revendications 1 à 3, **caractérisé en ce que** l'interrupteur (T) est commandé à l'état non-conducteur avec un retard (Δt) par rapport à l'interrupteur auxiliaire (T_{H}).

5. Dispositif d'alimentation sous tension continue suivant l'une des revendications 1 à 4, **caractérisé en ce que** l'interrupteur auxiliaire (T_{H}) est commandé à l'état conducteur avec un temps de retard (Δt) par rapport à l'interrupteur (T).
